# EUROPEAN PATENT APPLICATION

(11) **EP 2 058 160 A1**
(43) Date of publication of application: **13.05.2009**
(21) Application number: 07791079.2
(22) Date of filing: 20.07.2007
(51) Int. Cl.: B60K 6/365, B60K 6/40, B60K 6/445, B60K 6/547, B60K 17/04, B60L 11/14, F16H 3/66, F16H 3/72

(54) **POWER OUTPUT DEVICE AND HYBRID AUTOMOBILE**

(30) Priority: 01.09.2006 JP 2006238285
(71) Applicant: Toyota Jidosha Kabushiki Kaisha, Toyota-shi, Aichi 471-8571 (JP)
(72) Inventor: OBA, Hidehiro, Toyota-shi Aichi 471-8571 (JP); IDESHIO, Yukihiko, Toyota-shi Aichi 471-8571 (JP)
(74) Representative: TBK-Patent
(86) International application number: PCT/JP2007/064342
(87) International publication number: WO 2008/026399

(57) **Abstract**

A hybrid vehicle 20 includes an engine 22, motors MG1 and MG2, a power distribution integration mechanism 40, and a transmission 60. The power distribution integration mechanism 40 has a sun gear 41 connected with the motor MG1, a carrier 45 connected with the motor MG2, and a ring gear 42 connected with the engine 22. The transmission 60 has planetary gear mechanisms PG1 and PG2 and brakes B1 and B2. The planetary gear mechanism PG1 includes a sun gear 61 connected with the carrier 45 of the power distribution integration mechanism 40, a common carrier 64 connected with a driveshaft 69, and a ring gear 62. The planetary gear mechanism PG2 includes a sun gear 65 connected with the sun gear 41 of the power distribution integration mechanism 40, the common carrier 64 shared by the planetary gear mechanism PG1, and a ring gear 66. The brake B1 is configured to fix the ring gear 62, and the brake B2 is configured to fix the ring gear 66.

## Description

### Technical Field

The present invention relates to a power output apparatus configured to output power to a driveshaft, as well as to a hybrid vehicle equipped with such a power output apparatus.

### Background Art

One proposed structure of the power output apparatus includes an internal combustion engine, two motors, a Ravigneaux planetary gear mechanism, and a parallel shaft-type transmission arranged to selectively link two output elements of the planetary gear mechanism to an output shaft (see, for example, Patent Document 1). The power output apparatus of this proposed structure is applicable to the front wheel-drive vehicle. In the power output apparatus of this structure, the internal combustion engine is horizontally arranged, and the internal combustion engine, the planetary gear mechanism, the two motors, and the parallel shaft-type transmission have rotating shafts extended in parallel to one another. Another proposed structure of the power output apparatus has a planetary gear mechanism including an input element connected with an internal combustion engine and two output elements, and a parallel shaft-type transmission including a countershaft connected with the respective output elements of the planetary gear mechanism (see, for example, Patent Document 2). In the power output apparatus of this proposed structure, the two output elements of the planetary gear mechanism are respectively fixed to the inner circumferences of corresponding rotors in an electric driving system. A conventionally known structure of the power output apparatus has a power distribution mechanism including an input element connected with an internal combustion engine, a reactive force element connected with a first motor generator, and an output element connected with a second motor generator, and two clutches arranged to selectively link an axle as an output member with the output element or with the reactive force element of the power distribution mechanism (see, for example, Patent Document 3). In the power output apparatus of this conventional structure, when the first motor generator is rotated at a negative rotation speed to perform power operation, the two clutches are controlled to connect the reactive force element of the power distribution mechanism with the output member and disconnect the output element of the power distribution mechanism from the output member. Such control prevents the occurrence of power circulation where the first motor generator is driven with electric power generated by the second motor generator that uses part of the power of the output member.
Patent Document 1: Japanese Patent Laid-Open No. 2005-155891
Patent Document 2: Japanese Patent Laid-Open No. 2003-106389
Patent Document 3: Japanese Patent Laid-Open No. 2005-125876

### Disclosure of the Invention

Because of the space limitation, it is difficult to apply the power output apparatus of the proposed structure disclosed in Patent Document 1 to the general rear-wheel drive vehicle or the rear-wheel drive-based four-wheel drive vehicle. The power output apparatus of the proposed structure disclosed in Patent Document 2 is applicable to the rear-wheel drive vehicle. The parallel shaft-type transmission, however, has the large dimensions both in the axial direction and in the radial direction and lowers the suitability of the power output apparatus for being mounted on the vehicle. The power output apparatus of the structure in Patent Document 2 requires the large-diameter rotors and thereby causes the electric driving system to be unsuitable for being mounted on the vehicle. In application of these prior art power output apparatuses to the vehicle of the rear wheel-drive system, it is required to improve the power transmission efficiency in a wide driving range. There is accordingly still room for improvement in the conventional power output apparatuses.

There would thus be a demand for providing a small-sized power output apparatus especially suitable for being mounted on a vehicle of a rear-wheel drive-based system, as well as a hybrid vehicle equipped with such a power output apparatus. There would also be a demand for providing a power output apparatus having improved power transmission efficiency in a wide driving range, as well as a hybrid vehicle equipped with such a power output apparatus.

The present invention accomplishes at least part of the demands mentioned above and the other relevant demands by the following configurations applied to the power output apparatus and to the hybrid vehicle.

According to one aspect, the invention is directed to a power output apparatus configured to output power to a driveshaft. The power output apparatus includes: an internal combustion engine; a first motor designed to input and output power; a second motor designed to input and output power; a power distribution integration mechanism constructed to have a first element connecting with a rotating shaft of the first motor, a second element connecting with a rotating shaft of the second motor, and a third element connecting with an engine shaft of the internal combustion engine and to allow differential rotations of the three elements; and a speed change-transmission assembly including: a first change-speed differential rotation mechanism configured to have an input element connecting with the first element of the power distribution integration mechanism, an output element connecting with the driveshaft, and a fixable element and to allow differential rotations of the three elements; a second change-speed differential rotation mechanism configured to have an input element connecting with the second element of the power distribution integration mechanism, an output element connecting with the driveshaft, and a fixable element and to allow differential rotations of the three elements; a first fixation device configured to fix the fixable element of the first change-speed differential rotation mechanism in a non-rotatable manner; and a second fixation device configured to fix the fixable element of the second change-speed differential rotation mechanism in a non-rotatable manner.

The power output apparatus has the speed change-transmission assembly including the three element-type first change-speed differential rotation mechanism and the three element-type second change-speed differential rotation mechanism. The speed change-transmission assembly is located in the downstream of and is arranged coaxially with the internal combustion engine, the first and the second motors, and the power distribution integration mechanism. The speed change-transmission assembly of this arrangement desirably has reduced dimensions both in an axial direction and in a radial direction, compared with a speed change-transmission assembly of a parallel-shaft structure. The power output apparatus according to this aspect of the invention is thus small-sized and is specifically suitable for being mounted on a vehicle of a rear-wheel drive-based system. The fixation of the fixable element of the first change-speed differential rotation mechanism in the non-rotatable manner by the first fixation device of the speed change-transmission assembly specifies the first element of the power distribution integration mechanism to an output element and causes the first motor connecting with the first element to function as a motor, while specifying the second element of the power distribution integration mechanism to a reactive force element and causing the second motor connecting with the second element to function as a generator. The fixation of the fixable element of the second change-speed differential rotation mechanism in the non-rotatable manner by the second fixation device of the speed change-transmission assembly specifies the second element of the power distribution integration mechanism to the output element and causes the second motor connecting with the second element to function as a motor, while specifying the first element of the power distribution integration mechanism to the reactive force element and causing the first motor connecting with the first element to function as a generator. In the power output apparatus of this configuration, adequate changeover between the fixation of the fixable element of the first change-speed differential rotation mechanism by means of the first fixation device and the fixation of the fixable element of the second change-speed differential rotation mechanism by means of the second fixation device effectively prevents the rotation speed of the second motor or the first motor functioning as the generator from decreasing to a negative value with an increase in rotation speed of the first motor or the second motor functioning as the motor, thus preventing the occurrence of power circulation. The speed change-transmission assembly uses the first fixation device and the second fixation device to fix both the fixable element of the first change-speed differential rotation mechanism and the fixable element of the second change-speed differential rotation mechanism in the non-rotatable manner. Such fixation enables the output power of the internal combustion engine to be mechanically (directly) transmitted to the driveshaft at a fixed change gear ratio. The power output apparatus according to the above aspect of the invention thus desirably improves the power transmission efficiency in a wide driving range.

In one preferable application of the power output apparatus according to the above aspect of the invention, the first change-speed differential rotation mechanism and the second change-speed differential rotation mechanism of the speed change-transmission assembly are three element-type planetary gear mechanisms. In one preferable embodiment of this application, the first change-speed differential rotation mechanism is a single-pinion planetary gear mechanism including a sun gear connected with the first element of the power distribution integration mechanism, a ring gear arranged to be fixable in a non-rotatable manner by the first fixation device, and a carrier arranged to hold at least one pinion gear engaging with both the sun gear and the ring gear and connected with the driveshaft, and the second change-speed differential rotation mechanism is a single-pinion planetary gear mechanism including a sun gear connected with the second element of the power distribution integration mechanism, a ring gear arranged to be fixable in a non-rotatable manner by the second fixation device, and a carrier arranged to hold at least one pinion gear engaging with both the sun gear and the ring gear and connected with the carrier of the first change-speed differential rotation mechanism and with the driveshaft. In the fixation of the ring gear of the first change-speed differential rotation mechanism, the power from the first element of the power distribution integration mechanism is subjected to speed change at a change gear ratio based on a gear ratio of the first change-speed differential rotation mechanism (the number of teeth of the sun gear / the number of teeth of the ring gear) and is transmitted to the driveshaft. In the fixation of the ring gear of the second change-speed differential rotation mechanism, the power from the second element of the power distribution integration mechanism is subjected to speed change at a change gear ratio based on a gear ratio of the second change-speed differential rotation mechanism (the number of teeth of the sun gear / the number of teeth of the ring gear).

In another preferable application of the power output apparatus according to the above aspect of the invention, the speed change-transmission assembly further includes a change-speed connecting-disconnecting device configured to allow connection and disconnection of the output element with and from the fixable element in either one of the first change-speed differential rotation mechanism and the second change-speed differential rotation mechanism. The speed change-transmission assembly of this structure connects the output element with the fixable element in one of the first change-speed differential rotation mechanism and the second change-speed differential rotation mechanism, while fixing the fixable element in the other of the first change-speed differential rotation mechanism and the second change-speed differential rotation mechanism in the non-rotatable manner. This enables the output power of the internal combustion engine to be mechanically (directly) transmitted to the driveshaft at a fixed change gear ratio, which is different from the fixed change gear ratio in the state of fixing both the fixable element of the first change-speed differential rotation mechanism and the fixable element of the second change-speed differential rotation mechanism in the non-rotatable manner. In this state, in response to release of the fixation of the fixable element in the other of the first change-speed differential rotation mechanism and the second change-speed differential rotation mechanism to allow the rotation of the fixable element, the change-speed connecting-disconnecting device substantially locks the respective element of one of the first change-speed differential rotation mechanism and the second change-speed differential rotation mechanism to allow their integral rotation. This enables the power from either the first element or the second element of the power distribution integration mechanism to be directly transmitted to the driveshaft. The power output apparatus of this arrangement thus favorably improves the power transmission efficiency in the wider driving range.

In one preferable embodiment of this application, the power output apparatus further has: a third fixation device configured to fix either one of the first element and the second element of the power distribution integration mechanism in a non-rotatable manner. The third fixation device may be actuated to fix, in the non-rotatable manner, the first element or the second element of the power distribution integration mechanism (specified to the reactive force element), which is connected with the first motor or with the second motor functioning as the generator in the state of connection of the output element with the fixable element in one of the first change-speed differential rotation mechanism and the second change-speed differential rotation mechanism. This enables the output power of the internal combustion engine to be mechanically (directly) transmitted to the driveshaft at a fixed change gear ratio, which is different from the fixed change gear ratio in the state of fixing both the fixable element of the first change-speed differential rotation mechanism and the fixable element of the second change-speed differential rotation mechanism in the non-rotatable manner and from the fixed change gear ratio in the state of connection of the output element with the fixable element in one of the first change-speed differential rotation mechanism and the second change-speed differential rotation mechanism to allow their integral rotation. The power output apparatus of this arrangement thus favorably improves the power transmission efficiency in the wider driving range.

In one preferable embodiment of the invention, the power output apparatus further has a connecting-disconnecting device configured to allow one of connection and disconnection of the first motor with and from the first element, connection and disconnection of the second motor with and from the second element, and connection and disconnection of the internal combustion engine with and from the third element. In the power output apparatus of this embodiment, in response to the disconnection by the connecting-disconnecting device, the functions of the first change-speed differential rotation mechanism and the second change-speed differential rotation mechanism substantially separate the internal combustion engine from the first and the second motors and the speed change-transmission assembly. In the power output apparatus of this arrangement, a stop of the internal combustion engine in combination with the disconnection by the connecting-disconnecting device enables the power from at least one of the first motor and the second motor to be transmitted to the driveshaft with high efficiency with a change of the change gear ratio of the speed change-transmission assembly. This arrangement of the power output apparatus accordingly reduces the maximum torques required for the first motor and the second motor and thereby allows further size reduction of the first motor and the second motor. The connecting-disconnecting device may be located between the first motor and the first element or between the second motor and the second element to correspondingly connect and disconnect the first motor or the second motor with and from the first element or the second element. The speed change-transmission assembly may be structured to transmit the power from the first motor or from the second motor as the connection-disconnection target of the connecting-disconnecting device to the driveshaft, in response to the disconnection by the connecting-disconnecting device.

In still another preferable application of the power output apparatus according to the above aspect of the invention, the power distribution integration mechanism is located between the first motor and the second motor and is arranged coaxially with the first motor and the second motor. The coaxial arrangement of the power distribution integration mechanical between and with the coaxial first motor and second motor allows the further size reduction of the first motor and the second motor in the radial direction. The power output apparatus of this application is thus small-sized and is specifically suitable for being mounted on the vehicle of the rear-wheel drive-based system. In the power output apparatus according to the above aspect of the invention, the power distribution integration mechanism may be a three element-type planetary gear mechanism. The size reduction of the power distribution integration mechanism enables the power output apparatus to be smaller-sized and to be more suitable for being mounted on the vehicle of the rear-wheel drive-based system.

According to another aspect, the invention is also directed to a hybrid vehicle equipped with drive wheels driven with power transmitted from a driveshaft. The hybrid vehicle includes: an internal combustion engine; a first motor designed to input and output power; a second motor designed to input and output power; a power distribution integration mechanism constructed to have a first element connecting with a rotating shaft of the first motor, a second element connecting with a rotating shaft of the second motor, and a third element connecting with an engine shaft of the internal combustion engine and to allow differential rotations of the three elements; and a speed change-transmission assembly including: a first change-speed differential rotation mechanism configured to have an input element connecting with the first element of the power distribution integration mechanism, an output element connecting with the driveshaft, and a fixable element and to allow differential rotations of the three elements; a second change-speed differential rotation mechanism configured to have an input element connecting with the second element of the power distribution integration mechanism, an output element connecting with the driveshaft, and a fixable element and to allow differential rotations of the three elements; a first fixation device configured to fix the fixable element of the first change-speed differential rotation mechanism in a non-rotatable manner; and a second fixation device configured to fix the fixable element of the second change-speed differential rotation mechanism in a non-rotatable manner.

The power output apparatus mounted on the hybrid vehicle is small-sized and is specifically suitable for being mounted on a vehicle of a rear-wheel drive-based system. The power output apparatus also has the improved power transmission efficiency in the wide driving range as discussed above. The hybrid vehicle equipped with the power output apparatus accordingly has both the high fuel consumption and the good driving performance.

In one preferable application of the hybrid vehicle according to the above aspect of the invention, the first change-speed differential rotation mechanism and the second change-speed differential rotation mechanism of the speed change-transmission assembly are three element-type planetary gear mechanisms.

In one preferable embodiment of the above application, the first change-speed differential rotation mechanism is a single-pinion planetary gear mechanism including a sun gear connected with the first element of the power distribution integration mechanism, a ring gear arranged to be fixable in a non-rotatable manner by the first fixation device, and a carrier arranged to hold at least one pinion gear engaging with both the sun gear and the ring gear and connected with the driveshaft, and the second change-speed differential rotation mechanism is a single-pinion planetary gear mechanism including a sun gear connected with the second element of the power distribution integration mechanism, a ring gear arranged to be fixable in a non-rotatable manner by the second fixation device, and a carrier arranged to hold at least one pinion gear engaging with both the sun gear and the ring gear and connected with the carrier of the first change-speed differential rotation mechanism and with the driveshaft.

In another preferable application of the hybrid vehicle according to the above aspect of the invention, the speed change-transmission assembly further includes a change-speed connecting-disconnecting device configured to allow connection and disconnection of the output element with and from the fixable element in either one of the first change-speed differential rotation mechanism and the second change-speed differential rotation mechanism.

In one preferable embodiment of the above application, the hybrid vehicle further has: a third fixation device configured to fix either one of the first element and the second element of the power distribution integration mechanism in a non-rotatable manner.

In one preferable embodiment of the invention, the hybrid vehicle further has a connecting-disconnecting device configured to allow one of connection and disconnection of the first motor with and from the first element, connection and disconnection of the second motor with and from the second element, and connection and disconnection of the internal combustion engine with and from the third element.

In still another preferable application of the hybrid vehicle according to the above aspect of the invention, the power distribution integration mechanism is located between the first motor and the second motor and is arranged coaxially with the first motor and the second motor.

In the hybrid vehicle according to the above aspect of the invention, the power distribution integration mechanism may be a three element-type planetary gear mechanism.

### Brief Description of the Drawings

Fig. 1 schematically illustrates the configuration of a hybrid vehicle 20 in one embodiment of the invention;
Fig. 2 is an explanatory view showing torque-rotation speed dynamics of primary elements in a power distribution integration mechanism 40 and in a transmission 60 in the case of an upshift of the change gear ratio of the transmission 60 with a change of the vehicle speed during a drive of the hybrid vehicle 20 with operation of an engine 22;
Fig. 3 is an explanatory view similar to Fig. 2;
Fig. 4 is an explanatory view similar to Fig. 2;
Fig. 5 is an explanatory view similar to Fig. 2;
Fig. 6 is an explanatory view similar to Fig. 2;
Fig. 7 is an explanatory view similar to Fig. 2;
Fig. 8 is an alignment chart showing torque-rotation speed dynamics of the respective elements in the power distribution integration mechanism 40 and in a reduction gear mechanism 50 in a mode of making a motor MG1 function as a generator and a motor MG2 function as a motor;
Fig. 9 is an alignment chart showing torque-rotation speed dynamics of the respective elements in the power distribution integration mechanism 40 and in the reduction gear mechanism 50 in a mode of making the motor MG2 function as a generator and the motor MG1 function as a motor;
Fig. 10 is an explanatory view for explaining a motor drive mode in the hybrid vehicle 20 of the embodiment; and
Fig. 11 schematically illustrates the configuration of a hybrid vehicle 20A in one modified example.

### Best Modes of Carrying Out the Invention

One mode of carrying out the invention is described below as a preferred embodiment.

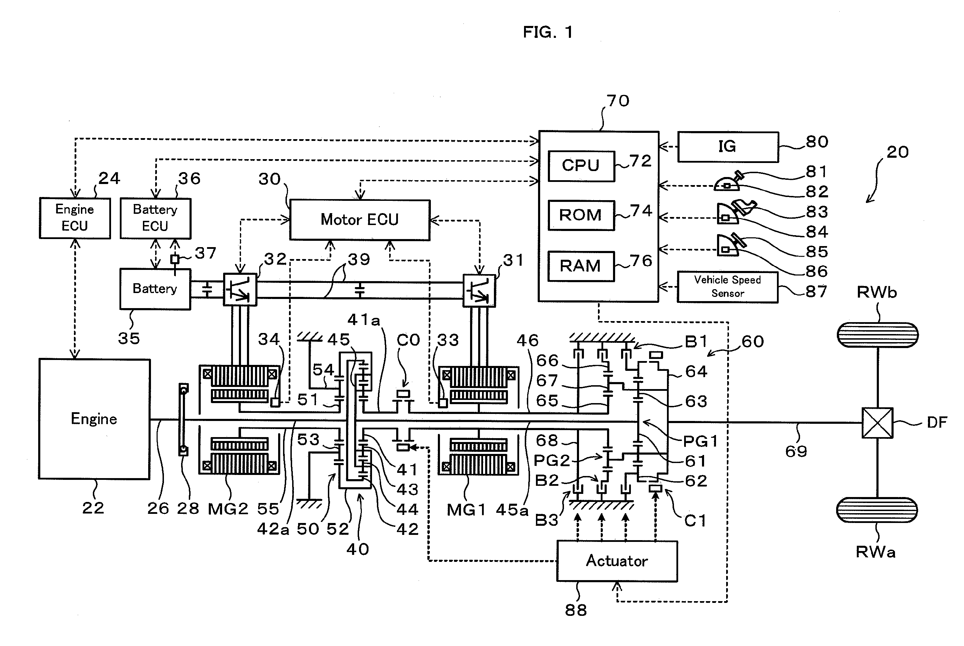

Fig. 1 schematically illustrates the configuration of a hybrid vehicle 20 in one embodiment of the invention. The hybrid vehicle 20 shown in Fig. 1 is constructed as a rear-wheel drive vehicle and includes an engine 22 located in a front portion of the vehicle, a power distribution integration mechanism (differential rotation mechanism) 40 connected with a crankshaft 26 or an output of the engine 22, a motor MG1 connected with the power distribution integration mechanism 40 and designed to have power generation capability, a motor MG2 arranged coaxially with the motor MG1 to be connected with the power distribution integration mechanism 40 via a reduction gear mechanism 50 and designed to have power generation capability, a transmission 60 constructed to transmit the output power of the power distribution integration mechanism 40 with a speed change at a different change gear ratio, and a hybrid electronic control unit 70 (hereafter referred to as 'hybrid ECU') configured to control the operations of the whole hybrid vehicle 20.

The engine 22 is constructed as an internal combustion engine designed to consume a hydrocarbon fuel, such as gasoline or light oil, and thereby generate power. The engine 22 is under operation controls, such as fuel injection control, ignition timing control, and intake air flow control, of an engine electronic control unit 24 (hereafter referred to as engine ECU). The engine ECU 24 inputs diverse signals from various sensors provided for the engine 22 to measure and detect the operating conditions of the engine 22. The engine ECU 24 establishes communication with the hybrid ECU 70 to control the operations of the engine 22 in response to control signals from the hybrid ECU 70 and with reference to the diverse signals from the various sensors and to output data regarding the operating conditions of the engine 22 to the hybrid ECU 70 according to the requirements.

The motors MG1 and MG2 are constructed as known synchronous motor generators to enable operations as both a generator and a motor. The motors MG1 and MG2 are arranged to transmit electric power to and from a battery 35 or an accumulator via inverters 31 and 32. Power lines 39 connecting the battery 35 with the inverters 31 and 32 are structured as common positive bus and negative bus shared by the inverters 31 and 32. Such connection enables electric power generated by one of the motors MG1 and MG2 to be consumed by the other motor MG2 or MG1. The battery 35 may thus be charged with surplus electric power generated by either of the motors MG1 and MG2 and be discharged to supplement insufficient electric power. The battery 35 is neither charged nor discharged upon the balance of the input and output of electric powers between the motors MG1 and MG2. Both the motors MG1 and MG2 are driven and controlled by a motor electronic control unit 30 (hereafter referred to as motor ECU). The motor ECU 30 inputs various signals required for driving and controlling the motors MG1 and MG2, for example, signals representing rotational positions of rotors in the motors MG1 and MG2 from rotational position detection sensors 33 and 34 and signals representing phase currents to be applied to the motors MG1 and MG2 from current sensors (not shown). The motor ECU 30 outputs switching control signals to the inverters 31 and 32. The motor ECU 30 also computes rotation speeds Nm1 and Nm2 of the rotors in the motors MG1 and MG2 according to a rotation speed computation routine (not shown) based on the input signals from the rotational position detection sensors 33 and 34. The motor ECU 30 establishes communication with the hybrid ECU 70 to drive and control the motors MG1 and MG2 in response to control signals received from the hybrid ECU 70 and to output data regarding the operating conditions of the motors MG1 and MG2 to the hybrid ECU 70 according to the requirements.

The battery 35 is under control and management of a battery electronic control unit 36 (hereafter referred to as battery ECU). The battery ECU 36 inputs signals required for management and control of the battery 35, for example, an inter-terminal voltage from a voltage sensor (not shown) located between terminals of the battery 35, a charge-discharge current from a current sensor (not shown) located in the power line 39 connecting with the output terminal of the battery 35, and a battery temperature Tb from a temperature sensor 37 attached to the battery 35. The battery ECU 36 outputs data regarding the operating conditions of the battery 35 by communication to the hybrid ECU 70 and to the engine ECU 24 according to the requirements. For the purpose of control and management of the battery 35, the battery ECU 36 also performs an arithmetic operation of calculating a remaining charge or state of charge SOC of the battery 35 from an integrated value of the charge-discharge current.

The power distribution integration mechanism 40 is located, together with the motors MG1 and MG2, the reduction gear mechanism 50, and the transmission 60, in a transmission casing (not shown) and is arranged coaxially with the crankshaft 26 across a predetermined distance from the engine 22. The power distribution integration mechanism 40 of the embodiment is constructed as a double-pinion planetary gear mechanism including a sun gear 41 as an external gear, a ring gear 42 as an internal gear arranged concentrically with the sun gear 41, and a carrier 45 arranged to hold at least one set of two pinion gears 43 and 44 in such a manner as to allow both their revolutions and their rotations on their axes. The two pinion gears 43 and 44 are connected with each other and are arranged to respectively engage with the sun gear 41 and engage with the ring gear 42. The power distribution integration mechanism 40 has the sun gear 41 (second element), the ring gear 42 (third element), and the carrier 45 (first element) as elements of differential rotation. The sun gear 41 as the second element of the power distribution integration mechanism 40 is connected with the motor MG1 (hollow rotor) or a second motor via a hollow sun gear shaft 41a extended from the sun gear 41 in an opposite direction to the engine 22 and a hollow first motor shaft 46 extended in the same direction (that is, toward a rear end of the vehicle). The carrier 45 as the first element is connected with the motor MG2 (hollow rotor) or a first motor via the reduction gear mechanism 50 located between the power distribution integration mechanism 40 and the engine 22 and a hollow second motor shaft 55 extended from the reduction gear mechanism 50 (sun gear 51) toward the engine 22. The ring gear 42 as the third element is connected with the crankshaft 26 of the engine 22 via a ring gear shaft 42a extended to pass through the hollow second motor shaft 55 and the motor MG2 and a damper 28.

As shown in Fig. 1, a clutch C0 (connecting-disconnecting device) is provided between the sun gear shaft 41a and the first motor shaft 46 to connect and disconnect the sun gear shaft 41a with and from the first motor shaft 46. In the embodiment, the clutch C0 is structured, for example, as a dog clutch to make a dog element fastened to an end of the sun gear shaft 41a engage with a dog element fastened to an end of the first motor shaft 46 with little loss and to release the engagement. The clutch C0 is actuated by an electric, electromagnetic, or hydraulic actuator 88. Releasing the clutch C0 disconnects the sun gear shaft 41a from the first motor shaft 46 and thereby separates the motor MG1 or the second motor from the sun gear 41 as the second element of the power distribution integration mechanism 40. The function of the power distribution integration mechanism 40 substantially separates the engine 22 from the motors MG1 and MG2 and the transmission 60.

The first motor shaft 46 connectable with the sung gear 41 of the power distribution integration mechanism 40 by means of the clutch C0 is further extended from the motor MG1 in the opposite direction to the engine 22 (that is, toward the rear end of the vehicle) and is connected to the transmission 60. A carrier shaft (connecting shaft) 45a is extended from the carrier 45 of the power distribution integration mechanism 40 in the opposite direction to the engine 22 (that is, toward the rear end of the vehicle) to pass through the hollow sun gear shaft 41a and the hollow first motor shaft 46 and is also connected to the transmission 60. In the structure of the embodiment, the power distribution integration mechanism 40 is located between the coaxial motors MG1 and MG2 and is arranged coaxially with both the motors MG1 and MG2. The engine 22 is arranged coaxially with the motor MG2 and is located opposite to the transmission 60 across the power distribution integration mechanism 40. Namely the engine 22, the motors MG1 and MG2, the power distribution integration mechanism 40, and the transmission 60 as the constituents of the power output apparatus in the embodiment are arranged in the sequence of the engine 22, the motor MG2, (the reduction gear mechanism 50), the power distribution integration mechanism 40, the motor MG1, and the transmission 60 in a direction from the front end toward the rear end of the vehicle. The power output apparatus is accordingly small-sized and is specifically suitable for being mounted on the hybrid vehicle 20 of the rear-wheel drive-based system.

In the structure of the embodiment, as explained above, the sun gear 41 as the second element of the power distribution integration mechanism 40 is connected to the transmission 60 via the sun gear shaft 41a, the clutch C0, and the first motor shaft 46, while the carrier 45 as the first element of the power distribution integration mechanism 40 is connected to the transmission 60 via the carrier shaft 45a. In the hybrid vehicle 20, one of the sun gear 41 and the carrier 45 in the power distribution integration mechanism 40 is thus specified as a reactive force element to apply a reaction force against a torque output from the engine 22, whereas the other is specified as an output element to output power to the transmission 60. Specifying the sun gear 41 as the reactive force element causes the motor MG1 to function as a generator. In this state, the power distribution integration mechanism 40 distributes the power of the engine 22 input via the ring gear 42 into the sung gear 41 and the carrier 45 according to their gear ratio, while integrating the power of the engine 22 with the power of the motor MG2 functioning as a motor and transmitting the integrated power to the carrier 45. Specifying the carrier 45 as the reactive force element, on the other hand, causes the motor MG2 to function as a generator. In this state, the power distribution integration mechanism 40 distributes the power of the engine 22 input via the ring gear 42 into the sun gear 41 and the carrier 45 according to their gear ratio, while integrating the power of the engine 22 with the power of the motor MG1 functioning as a motor and transmitting the integrated power to the sun gear 41.

The reduction gear mechanism 50 is constructed as a single-pinion planetary gear mechanism including a sun gear 51 as an external gear, a ring gear 52 as an internal gear arranged concentrically with the sun gear 51, multiple pinion gears 53 arranged to engage with both the sun gear 51 and the ring gear 52, and a carrier 54 arranged to hold the multiple pinion gears 53 in such a manner as to allow both their revolutions and their rotations on their axes. The sun gear 51 of the reduction gear mechanism 50 is connected to the rotor of the motor MG2 via the second motor shaft 55. The ring gear 52 of the reduction gear mechanism 50 is fixed to the carrier 45 of the power distribution integration mechanism 40, so that the reduction gear mechanism 50 is substantially integrated with the power distribution integration mechanism 40. The carrier 54 of the reduction gear mechanism 50 is fixed to the transmission casing. The function of the reduction gear mechanism 50 reduces the speed of the power from the motor MG2 and transmits the power of the reduced speed to the carrier 45 of the power distribution integration mechanism 40, while increasing the speed of the power from the carrier 45 and transmitting the power of the increased speed to the motor MG2. In the structure of the embodiment, the reduction gear mechanism 50 is located between the motor MG2 and the power distribution integration mechanism 40 and is integrated with the power distribution integration mechanism 40. This arrangement allows the further size reduction of the power output apparatus.

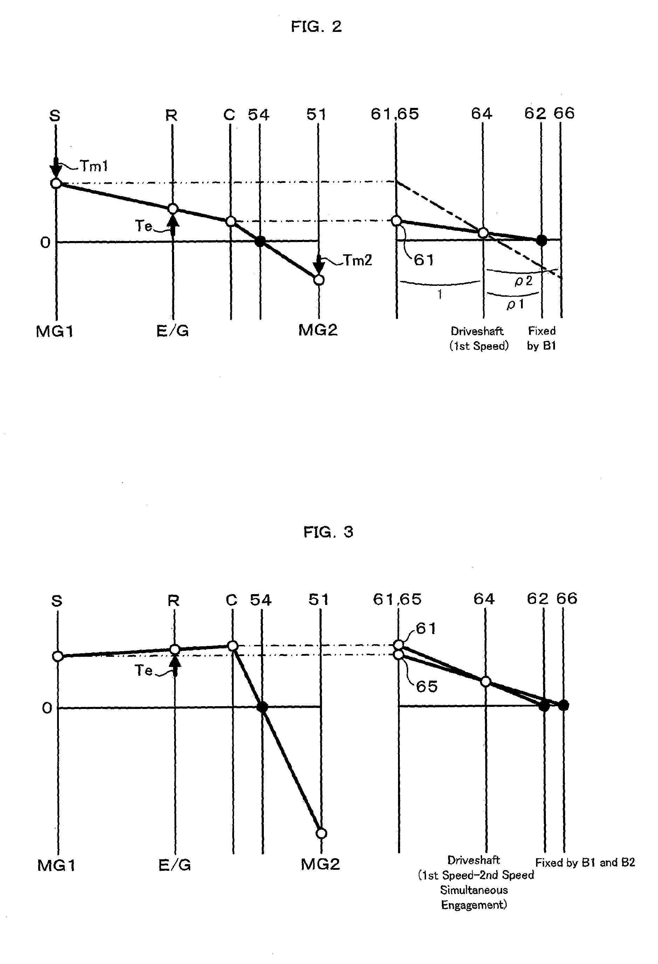

The transmission 60 is constructed as a planetary gear-type automatic transmission having a change gear ratio selectively changeable among multiple different values. The transmission 60 includes a first change-speed planetary gear mechanism PG1, a second change-speed planetary gear mechanism PG2, a brake B1 (first fixation device) provided for the first change-speed planetary gear mechanism PG1, a brake B2 (second fixation device) provided for the second change-speed planetary gear mechanism PG2, a brake B3 (third fixation device), and a clutch C1 (change-speed connecting-disconnecting device). The first change-speed planetary gear mechanism PG1 is connected via the carrier shaft 45a to the carrier 45 as the first element of the power distribution integration mechanism 40. The second change-speed planetary gear mechanism PG2 is connected to the first motor shaft 46 that is connectable via the clutch C0 with the sun gear 41 as the second element of the power distribution integration mechanism 40. As shown in Fig. 1, the first change-speed planetary gear mechanism PG1 is constructed as a single-pinion planetary gear mechanism including a sun gear 65 connected with the carrier shaft 45a, a ring gear 66 as an internal gear arranged concentrically with the sun gear 61, and a carrier 64 arranged to hold multiple pinion gears 63 engaging with both the sun gear 61 and the ring gear 62 and connected with a driveshaft 69. The first change-speed planetary gear mechanism PG1 has the sun gear 61 (input element), the ring gear 62 (fixable element), and the carrier 64 (output element) as elements of differential rotation. The second change-speed planetary gear mechanism PG2 is constructed as a single-pinion planetary gear mechanism including a sun gear 65 connected with the first motor shaft 46, a ring gear 66 as an internal gear arranged concentrically with the sun gear 65, and the common carrier 64 with the first change-speed planetary gear mechanism PG1 arranged to hold multiple pinion gears 67 engaging with both the sun gear 61 and the ring gear 62. The second change-speed planetary gear mechanism PG2 has the sun gear 65 (input element), the ring gear 66 (fixable element), and the carrier 64 (output element) as elements of differential rotation. In the structure of the embodiment, the second change-speed planetary gear mechanism PG2 is arranged coaxially with and located ahead of the first change-speed planetary gear mechanism PG1 in the vehicle body. The second change-speed planetary gear mechanism PG2 has a slightly greater gear ratio p2 (the number of teeth of the sun gear 65 / the number of teeth of the ring gear 66) than a gear ratio ρ1 (the number of teeth of the sun gear 61 / the number of teeth of the ring gear 62) of the first change-speed planetary gear mechanism PG1 (see Fig. 2). The brake B1 fixes the ring gear 62 of the first change-speed planetary gear mechanism PG1 to the transmission casing to prohibit the rotation of the ring gear 62, while releasing the fixation of the ring gear 62 to allow the rotation of the ring gear 62. The brake B1 is actuated by the electric, electromagnetic, or hydraulic actuator 88. The brake B2 fixes the ring gear 66 of the second change-speed planetary gear mechanism PG2 to the transmission casing to prohibit the rotation of the ring gear 66, while releasing the fixation of the ring gear 66 to allow the rotation of the ring gear 66. The brake B2 is actuated by the actuator 88, like the brake B1. The brake B3 fixes the first motor shaft 46 or the sun gear 41 as the second element of the power distribution integration mechanism 40 to the transmission casing via a stator 68 fixed to the first motor shaft 46 to prohibit the rotation of the first motor shaft 46, while releasing the fixation of the stator 68 to allow the rotation of the first motor shaft 46. The brake B3 is actuated by the actuator 88, like the brakes B1 and B2. The clutch C1 connects and disconnects the carrier 64 as the output element with and from the ring gear 62 as the fixable element of the first change-speed planetary gear mechanism PG1. The clutch C1 is actuated by the actuator 88, like the brakes B1 through B3. The clutch C1 is structured, for example, as a dog clutch to make a dog element fastened to the carrier 64 engage with a dog element fastened to the ring gear 62 with little loss and to release the engagement. The power transmitted from the carrier 64 of the transmission 60 to the driveshaft 69 is eventually output to rear wheels RWa and RWb as drive wheels via a differential gear DF. The actuator 88 is shown as one integral body in the illustration of the embodiment but is designed to individually actuate the clutches C0 and C1 and the brakes B1 and B2.

The transmission 60 of this configuration significantly reduces the dimensions both in an axial direction and in a radial direction, compared with a transmission of a parallel-shaft structure. The first change-speed planetary gear mechanism PG1 and the second change-speed planetary gear mechanism PG2 are located in the downstream of and are arranged coaxially with the motors MG1 and MG2 and the power distribution integration mechanism 40. The transmission 60 of this arrangement desirably simplifies the bearing structure and reduces the required number of bearings. The transmission 60 has the change gear ratio selectively changeable among the multiple different values as discussed below. Fixation of the ring gear 62 of the first change-speed planetary gear mechanism PG1 to the transmission casing in the non-rotatable manner by means of the brake B1 causes the power from the carrier shaft 45a to be subjected to speed change at a change gear ratio of (ρ1/(1+ρ1)) based on the gear ratio ρ1 of the first change-speed planetary gear mechanism PG1 and to be transmitted to the driveshaft 69. Fixation of the ring gear 66 of the second change-speed planetary gear mechanism PG2 to the transmission casing in the non-rotatable manner by means of the brake B2 causes the power from the first motor shaft 46 to be subjected to speed change at a change gear ratio of (ρ2/(1+ρ2)) based on the gear ratio p2 of the second change-speed planetary gear mechanism PG2 and to be transmitted to the driveshaft 69. The connection of the carrier 64 with the ring gear 62 in the first change-speed planetary gear mechanism PG1 by means of the clutch C1 substantially integrates the sun gear 61, the ring gear 62, and the carrier 64 as the constituents of the first change-speed planetary gear mechanism PG1 and thereby causes the power from the carrier shaft 45a to be transmitted to the driveshaft 69 at a change gear ratio of 1. In the description below, the state of fixing the ring gear 62 of the first change-speed planetary gear mechanism PG1 to the transmission casing in the non-rotatable manner by means of the brake B1 is referred to as 'first speed state (1^{st} speed)' of the transmission 60. The state of fixing the ring gear 66 of the second change-speed planetary gear mechanism PG2 to the transmission casing in the non-rotatable manner by means of the brake B2 is referred to as 'second speed state (2^{nd} speed) ' of the transmission 60. The state of connecting the carrier 64 with the ring gear 62 in the first change-speed planetary gear mechanism PG1 by means of the clutch C1 is referred to as 'third speed state (3^{rd} speed)' of the transmission 60.

The hybrid ECU 70 is constructed as a microprocessor including a CPU 72, a ROM 74 configured to store processing programs, a RAM 76 configured to temporarily store data, input and output ports (not shown), and a communication port (not shown). The hybrid ECU 70 inputs, via its input port, an ignition signal from an ignition switch (start switch) 80, a gearshift position SP or a current setting position of a gearshift lever 81 from a gearshift position sensor 82, an accelerator opening Acc or the driver's depression amount of an accelerator pedal 83 from an accelerator pedal position sensor 84, a brake pedal position BP or the driver's depression amount of a brake pedal 85 from a brake pedal position sensor 86, and a vehicle speed V from a vehicle speed sensor 87. The hybrid ECU 70 makes connection with the engine ECU 24, the motor ECU 30, and the battery ECU 36 via its communication port to transmit various control signals and data to and from the engine ECU 24, the motor ECU 30, and the battery ECU 36 as mentioned previously. The actuator 88 actuating the clutch C0 and the brakes B1 through B3 and the clutch C1 of the transmission 60 is also under control of the hybrid ECU 70.

The following describes series of operations of the hybrid vehicle 20 in the embodiment having the configuration discussed above.

Figs. 2 through 7 show torque-rotation speed dynamics of primary elements in the power distribution integration mechanism 40 and in the transmission 60 in the case of an upshift of the change gear ratio of the transmission 60 with a change of the vehicle speed during a drive of the hybrid vehicle 20 with operation of the engine 22. During the drive of the hybrid vehicle 20 with the speed change shown in Fig. 2 to Fig. 7, under the overall control of the hybrid ECU 70 based on the driver's depression amount of the accelerator pedal 83 and the vehicle speed V, the engine 22 and the motors MG1 and MG2 are respectively controlled by the engine ECU 24 and by the motor ECU 30. The actuator 88 (for actuating the clutch C0 and the brakes B1 through B3 and the clutch C1 in the transmission 60) is directly controlled by the hybrid ECU 70. In the charts of Figs. 2 through 7, an S-axis represents a rotation speed of the sun gear 41 in the power distribution integration mechanism 40 (equivalent to a rotation speed Nm1 of the motor MG1 or the first motor shaft 46). An R-axis represents a rotation speed of the ring gear 42 in the power distribution integration mechanism 40 (equivalent to a rotation speed Ne of the engine 22). A C-axis represents a rotation speed of the carrier 45 in the power distribution integration mechanism 40 (equivalent to a rotation speed of the carrier shaft 45a and a rotation speed of the ring gear 52 in the reduction gear mechanism 50). A 54-axis represents a rotation speed of the carrier 54 in the reduction gear mechanism 50. A 51-axis represents a rotation speed of the sun gear 51 in the reduction gear mechanism 50 (equivalent to a rotation speed Nm2 of the motor MG2 or the second motor shaft 55). A 61, 65-axis represents a rotation speed of the sun gear 61 of the first change-speed planetary gear mechanism PG1 and a rotation speed of the sun gear 65 of the second change-speed planetary gear mechanism PG2 in the transmission 60. A 64-axis represents a rotation speed of the carrier 64 in the transmission 60 (equivalent to a rotation speed of the driveshaft 69). A 62-axis represents a rotation speed of the ring gear 62 in the first change-speed planetary gear mechanism PG1. A 66-axis represents a rotation speed of the ring gear 66 in the second change-speed planetary gear mechanism PG2.

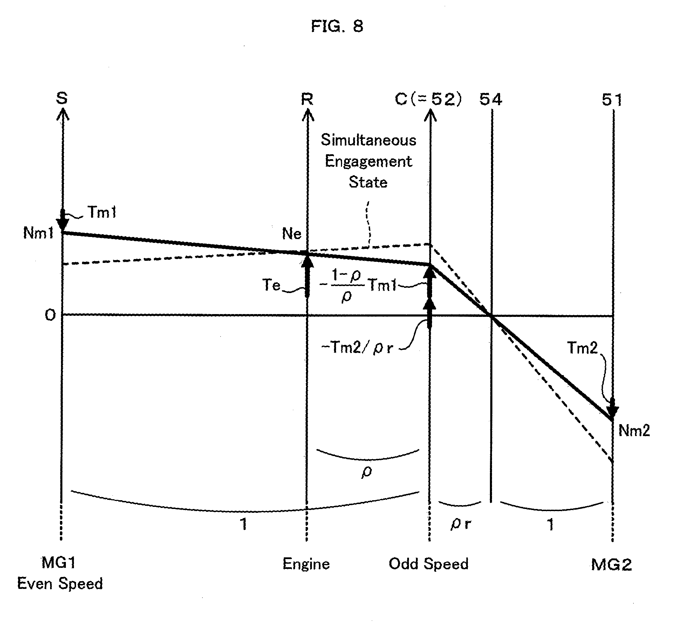

As shown in Fig. 2, on a start of the hybrid vehicle 20, the clutch C0 is coupled, and the brake B1 is engaged to fix the ring gear 62 of the first change-speed planetary gear mechanism PG1 to the transmission casing in the non-rotatable manner. This causes the transmission 60 to be set in the first speed state. In this first speed state, the motors MG1 and MG2 are driven and controlled to specify the carrier 45 of the power distribution integration mechanism 40 to the output element and to cause the motor MG2 connecting with the carrier 45 to function as a motor, while being driven and controlled to specify the sun gear 41 of the power distribution integration mechanism 40 to the reactive force element and to cause the motor MG1 connecting with the sun gear 41 to function as a generator. In the description hereafter, this mode of making the motor MG1 function as a generator and the motor MG2 function as a motor is referred to as 'first torque conversion mode'. The alignment chart of Fig. 8 shows torque-rotation speed dynamics of the respective elements in the power distribution integration mechanism 40 and in the reduction gear mechanism 50 in the first torque conversion mode. In the alignment chart of Fig. 8, an S-axis, an R-axis, a C-axis, a 54-axis, and a 51-axis represent the same as those in the charts of Figs. 2 through 7. In Fig. 8, ρ and ρr respectively denote a gear ratio of the power distribution integration mechanism 40 (the number of teeth of the sun gear 41 / the number of teeth of the ring gear 42) and a gear ratio of the reduction gear mechanism 50 (the number of teeth of the sun gear 51 / the number of teeth of the ring gear 52). In the first torque conversion mode, the power of the engine 22 is subjected to torque conversion by the power distribution integration mechanism 40 and the motors MG1 and MG2 and is output to the carrier 45. Controlling the rotation speed of the motor MG1 continuously and steplessly varies the ratio of the rotation speed of the engine 22 to the rotation speed of the carrier 45 as the output element. The power output to the carrier 45 (the carrier shaft 45a) is subjected to speed change (speed reduction) at the change gear ratio of (ρ1/(1+ρ1)) based on the gear ratio ρ1 of the first change-speed planetary gear mechanism PG1 and is transmitted to the driveshaft 69.

In response to an increase in vehicle speed V of the hybrid vehicle 20 in the state of Fig. 2, that is, in the first speed state of the transmission 60 in combination with the first torque conversion mode, as the rotation speed Nm1 of the motor MG1 (equivalent to the rotation speeds of the sun gear 41 and of the first motor shaft 46) gradually decreases, the negative rotation speed of the ring gear 66 of the second change-speed planetary gear mechanism PG2 approaches to 0. The brake B2 is then engaged to fix the ring gear 66 of the second change-speed planetary gear mechanism PG2 in the non-rotatable manner, while the ring gear 62 of the first change-speed planetary gear mechanism PG1 is kept fixed in the non-rotatable manner by means of the brake B1, as shown in Fig. 3. In the state of fixing both the ring gear 62 of the first change-speed planetary gear mechanism PG1 and the ring gear 66 of the second change-speed planetary gear mechanism PG2 in the non-rotatable manner by means of the brakes B1 and B2, setting 0 to both the torque commands of the motors MG1 and MG2 causes the motors MG1 and MG2 to idle without performing either the power operation or the regenerative operation. The output power (torque) of the engine 22 is then mechanically (directly) transmitted to the driveshaft 69 at a fixed (constant) change gear ratio (a value between the change gear ratio in the first speed state and the change gear ratio in the second speed state) without conversion into electrical energy. In the description hereafter, the mode of fixing both the ring gear 62 of the first change-speed planetary gear mechanism PG1 and the ring gear 66 of the second change-speed planetary gear mechanism PG2 in the non-rotatable manner by means of the brakes B1 and B2 is referred to as 'simultaneous engagement mode'. The state of Fig. 3 is specifically referred to as '1^{st} speed-2^{nd} speed simultaneous engagement state'.

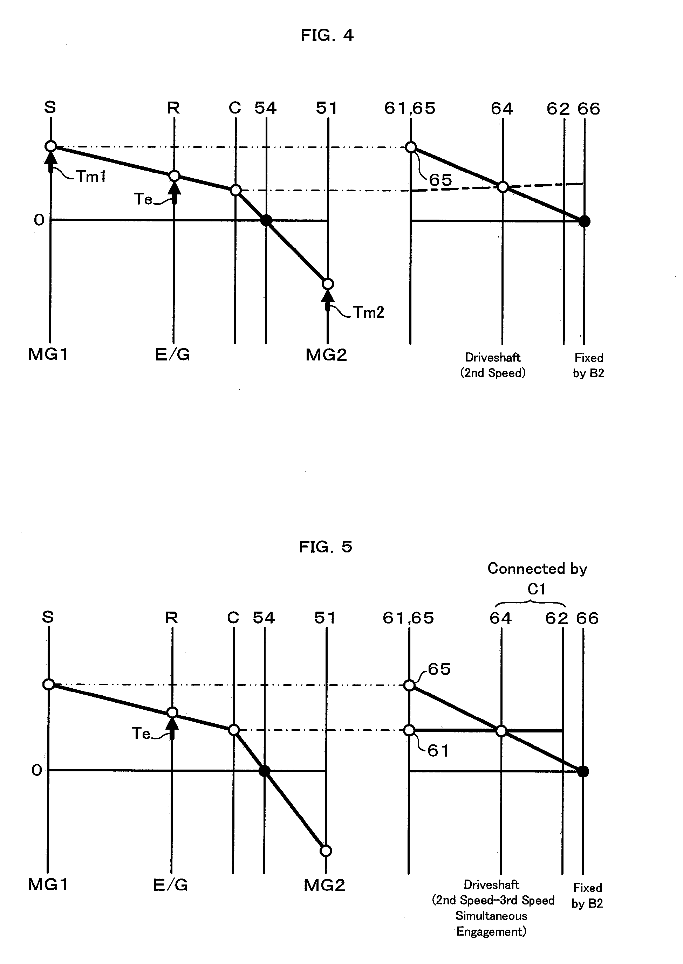

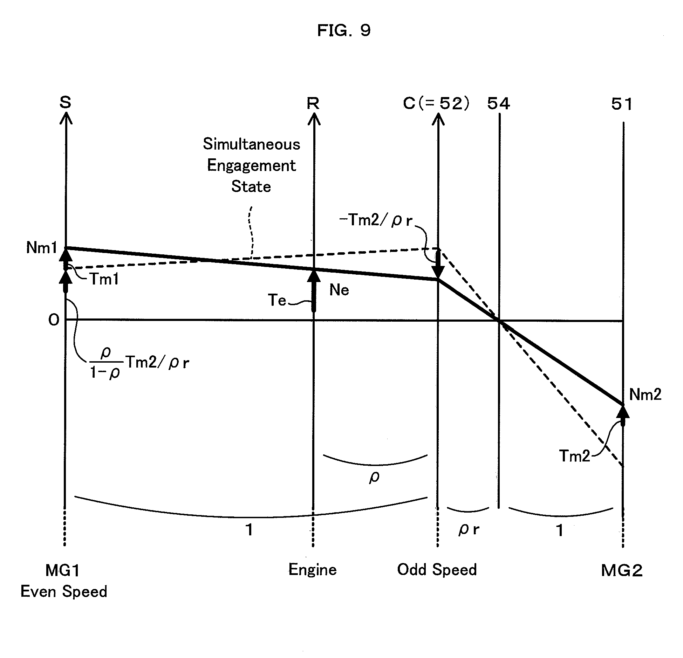

In the 1^{st} speed-2^{nd} speed simultaneous engagement state of Fig. 3, the brake B1 is released to allow the rotation of the ring gear 62 of the first change-speed planetary gear mechanism PG1, while the ring gear 66 of the second change-speed planetary gear mechanism PG2 is kept fixed by means of the brake B2. This causes the transmission 60 to be set in the second speed state shown in Fig. 4. In this second speed state, the motors MG1 and MG2 are driven and controlled to specify the sun gear 41 of the power distribution integration mechanism 40 to the output element and to cause the motor MG1 connecting with the sun gear 41 to function as a motor, while being driven and controlled to specify the carrier 45 of the power distribution integration mechanism 40 to the reactive force element and to cause the motor MG2 connecting with the carrier 45 to function as a generator. In the description hereafter, this mode of making the motor MG2 function as a generator and the motor MG1 function as a motor is referred to as 'second torque conversion mode'. The alignment chart of Fig. 9 shows torque-rotation speed dynamics of the respective elements in the power distribution integration mechanism 40 and in the reduction gear mechanism 50 in the second torque conversion mode. The symbols and numerals in the alignment chart of Fig. 9 represent the same as those in Fig. 2. In the second torque conversion mode, the power of the engine 22 is subjected to torque conversion by the power distribution integration mechanism 40 and the motors MG1 and MG2 and is output to the sun gear 41. Controlling the rotation speed of the motor MG2 continuously and steplessly varies the ratio of the rotation speed of the engine 22 to the rotation speed of the sun gear 41 as the output element. The power output to the sun gear 41 (the first motor shaft 46) is subjected to speed change (speed reduction) at the change gear ratio of (ρ2/(1+ρ2)) based on the gear ratio p2 of the second change-speed planetary gear mechanism PG2 and is transmitted to the driveshaft 69.

In response to an increase in vehicle speed V of the hybrid vehicle 20 in the state of Fig. 4, that is, in the second speed state of the transmission 60 in combination with the second torque conversion mode, the sun gear 61, the ring gear 62, and the carrier 64 of the first change-speed planetary gear mechanism PG1 have their rotation speeds approach to one another to allow their substantially integral rotation. The clutch C1 is then coupled to connect the carrier 64 with the ring gear 62 of the first change-speed planetary gear mechanism PG1, as shown in Fig. 5. In the state of connecting the carrier 64 with the ring gear 62 of the first change-speed planetary gear mechanism PG1 by means of the clutch C1 with the ring gear 66 of the second change-speed planetary gear mechanism PG2 kept fixed in the non-rotatable manner by means of the brake B2, setting 0 to both the torque commands of the motors MG1 and MG2 causes the motors MG1 and MG2 to idle without performing either the power operation or the regenerative operation. The output power (torque) of the engine 22 is then mechanically (directly) transmitted to the driveshaft 69 at a fixed (constant) change gear ratio (a value between the change gear ratio in the second speed state and the change gear ratio in the third speed state) without conversion into electrical energy. In the description hereafter, the mode of connecting the carrier 64 with the ring gear 62 of the first change-speed planetary gear mechanism PG1 by means of the clutch C1 with the ring gear 66 of the second change-speed planetary gear mechanism PG2 kept fixed in the non-rotatable manner by means of the brake B2 is also referred to as the 'simultaneous engagement mode'. The state of Fig. 5 is specifically referred to as '2^{nd} speed-3^{rd} speed simultaneous engagement state'.

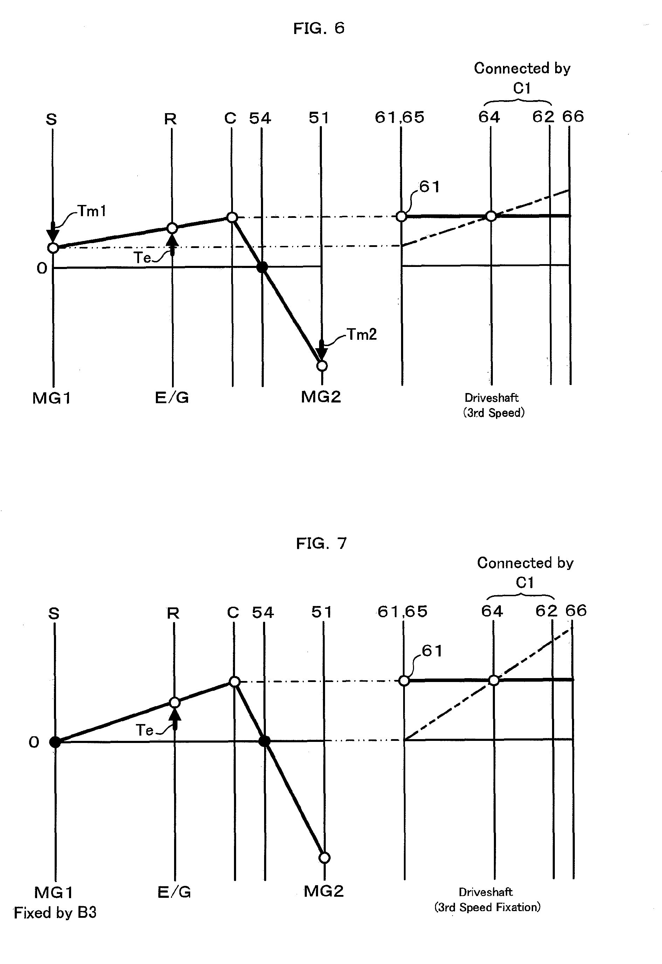

In the 2^{nd} speed -3^{rd} speed simultaneous engagement state of Fig. 5, the brake B2 is released to allow the rotation of the ring gear 66 of the second change-speed planetary gear mechanism PG2. This causes the transmission 60 to be set in the third speed state shown in Fig. 6. In this third speed state, the clutch C1 is coupled to substantially lock the sun gear 61, the ring gear 62, and the carrier 64 of the first change-speed planetary gear mechanism PG1 and thereby allow their integral rotation. The power from the carrier 45 of the power distribution integration mechanism 40 is then transmitted directly (at the change gear ratio of 1) to the driveshaft 69 via the carrier shaft 45a and the integral rotation of the respective elements in the second change-speed planetary gear mechanism PG2 as shown in Fig. 6. In this case, the carrier 45 and the sun gear 41 of the power distribution integration mechanism 40 respectively specified to the output element and to the reactive force element to activate the first torque conversion mode. Controlling the rotation speed of the motor MG1 continuously and steplessly varies the ratio of the rotation speed of the engine 22 to the rotation speed of the driveshaft 69 directly linked to the carrier 45 specified to the output element.

In response to an increase in vehicle speed V of the hybrid vehicle 20 in the state of Fig. 6, that is, in the third speed state of the transmission 60 in combination with the first torque conversion mode, the motor MG1, the first motor shaft 46, the sun gear 41, and the sun gear 61 of the first change-speed planetary gear mechanism PG1 have their rotation speeds approach to 0. The brake B3 is then engaged to fix the first motor shaft 46 or the sun gear 41 as the second element of the power distribution integration mechanism 40 in the non-rotatable manner via the stator 68 as shown in Fig. 7. In the state of fixing the first motor shaft 46 in the non-rotatable manner by means of the brake B3 with the carrier 64 and the ring gear 62 of the first change-speed planetary gear mechanism PG1 kept interconnected by means of the clutch C1, setting 0 to both the torque commands of the motors MG1 and MG2 causes the motors MG1 and MG2 to idle without performing either the power operation or the regenerative operation. The output power (torque) of the engine 22 is then subjected to speed change at a fixed (constant) change gear ratio (a value for the greater speed increase than the change gear ratio in the third speed state) and is directly transmitted to the driveshaft 69 without conversion into electrical energy. In the description hereafter, the mode of fixing the first motor shaft 46 (the motor MG1) in the non-rotatable manner by means of the brake B3 with the carrier 64 and the ring gear 66 kept interconnected by means of the clutch C1 to substantially lock the first change-speed planetary gear mechanism PG1 of the transmission 60 is also referred to as the 'simultaneous engagement mode'. The state of Fig. 7 is specifically referred to as '3^{rd} speed fixation state'. The series of operations described above is performed basically in a reverse flow for a downshift change of the change gear ratio of the transmission 60.

In the hybrid vehicle 20 of the embodiment, the torque conversion mode is alternately changed over between the first torque conversion mode and the second torque conversion mode with a change of the change gear ratio of the transmission 60 or a switchover of the first speed state to the third speed state as discussed above. Such alternate change of the torque conversion mode desirably prevents the rotation speed Nm1 or Nm2 of one motor MG1 or MG2 functioning as the generator from decreasing to a negative value with an increase of the rotation speed Nm2 or Nm1 of the other motor MG2 or MG1 functioning as the motor. The configuration of the hybrid vehicle 20 thus effectively prevents the occurrence of power circulation in the first torque conversion mode as well as the occurrence of power circulation in the second torque conversion mode, thus improving the power transmission efficiency in a wider driving range. The power circulation in the first torque conversion mode is that, in response to a decrease in rotation speed of the motor MG1 to a negative value, the motor MG2 consumes part of the power output to the carrier shaft 45a and generates electric power, while the motor MG1 consumes the electric power generated by the motor MG2 and outputs power. The power circulation in the second torque conversion mode is that, in response to a decrease in rotation speed of the motor MG2 to a negative value, the motor MG1 consumes part of the power output to the first motor shaft 46 and generates electric power, while the motor MG2 consumes the electric power generated by the motor MG1 and outputs power. Prevention of such power circulation restricts the maximum rotation speeds of the motors MG1 and MG2 and thereby allows size reduction of the motors MG1 and MG2. During a drive of the hybrid vehicle 20 in the simultaneous engagement mode, the output power of the engine 22 is mechanically (directly) transmitted to the driveshaft 69 at the fixed change gear ratio intrinsic to each of the 1^{st} speed-2^{nd} speed simultaneous engagement state, the 2^{nd} speed-3^{rd} speed simultaneous engagement state, and the 3^{rd} speed fixation state. This arrangement desirably increases the opportunity of mechanically outputting the power from the engine 22 to the driveshaft 69 without conversion into electrical energy, thus further improving the power transmission efficiency in the wider driving range. In the power output apparatus of a general configuration including an engine, two motors, and a power distribution integration mechanism such as a planetary gear mechanism, there is a greater fraction of the engine power converted into electrical energy at a relatively large speed reduction ratio between the engine and a driveshaft. This lowers the power transmission efficiency and tends to cause heat evolution from the motors MG1 and MG2. The simultaneous engagement mode discussed above is thus especially advantageous for the relatively large speed reduction ratio between the engine 22 and the driveshaft. In the hybrid vehicle 20 of the embodiment, the torque conversion mode is changed over between the first torque conversion mode and the second torque conversion mode via the simultaneous engagement mode at the time of a change of the change gear ratio in the transmission 60. This arrangement effectively prevents a torque-off condition at the time of a change of the change gear ratio and ensures a smooth and shockless change of the change gear ratio, that is, a smooth and shockless changeover of the torque conversion mode between the first torque conversion mode and the second torque conversion mode.

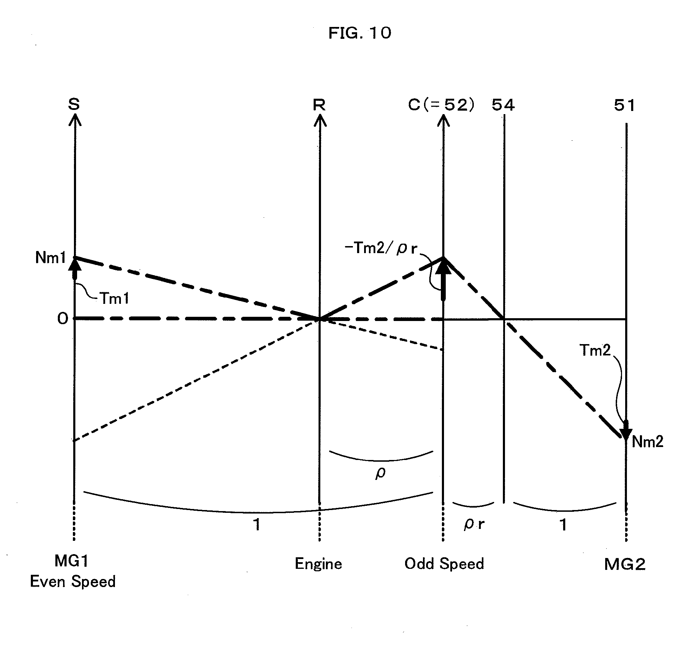

The motor drive mode is described below with reference to Fig. 10. When the hybrid vehicle 20 is driven in the motor drive mode, at least one of the motors MG1 and MG2 consumes the electric power discharged from the battery 35 and outputs power with the operation of the engine 22 stopped. The hybrid vehicle 20 of the embodiment has multiple different types of the motor drive mode, a first motor drive mode of causing only the motor MG2 to output power, a second motor drive mode of causing only the motor MG1 to output power, and a third motor drive mode of causing both the motors MG1 and MG2 to output power. In the first through the third motor drive modes, the clutch C0 is released to disconnect the sun gear shaft 41a from the first motor shaft 46.

In the first motor drive mode, the transmission 60 is set in the first speed state by the release of the clutch C0 and the fixation of the ring gear 62 of the first change-speed planetary gear mechanism PG1 to the transmission casing in the non-rotatable manner by means of the brake B1 or alternatively set in the third speed state by the connection of the carrier 64 with the ring gear 62 of the first change-speed planetary gear mechanism PG1 by means of the clutch C1. In the first motor drive mode, only the motor MG2 is driven and controlled to output power to the carrier 45 as shown by the one-dot chain line in Fig. 10. The output power is transmitted from the carrier shaft 45a to the driveshaft 69 via the transmission 60 set either in the first speed state or in the third speed state. Due to the release of the clutch C0 to disconnect the sun gear 41 from the first motor shaft 46, the function of the power distribution integration mechanism 40 prevents the follow-up of the crankshaft 26 of the engine 22 at stop, while the function of the second change-speed planetary gear mechanism PG2 prevents the follow-up of the motor MG1 (see the one-dot chain line and the two-dot chain line in Fig. 10). Such prevention of the follow-up effectively reduces a decrease of the power transmission efficiency. In the second motor drive mode, the transmission 60 is set in the second speed state by the release of the clutch C0 and the fixation of the ring gear 66 of the second change-speed planetary gear mechanism PG2 to the transmission casing in the non-rotatable manner by means of the brake B2. In the second motor drive mode, only the motor MG1 is driven and controlled to output power to the sun gear 41 as shown by the two-dot chain line in Fig. 10. The output power is transmitted from the sun gear shaft 41a to the driveshaft 69 via the first motor shaft 46 and the transmission 60 set in the second speed state. Due to the release of the clutch C0 to disconnect the sun gear 41 from the first motor shaft 46, the function of the power distribution integration mechanism 40 prevents the follow-up of the crankshaft 26 of the engine 22 at stop, while the function of the first change-speed planetary gear mechanism PG1 prevents the follow-up of the motor MG2 (see Fig. 10). Such prevention of the follow-up effectively reduces a decrease of the power transmission efficiency. In the third motor drive mode, the transmission 60 is set either in the 1^{st} speed-2^{nd} speed simultaneous engagement state or in the 2^{nd} speed-3^{rd} speed simultaneous engagement state by using two of the brakes B1 and B2 and the clutch C1. In the third motor drive mode, both the motors MG1 and MG2 are driven and controlled to output power. A large power is accordingly transmitted to the driveshaft 69 in the motor drive mode. This arrangement desirably ensures the good toeing capacity in the motor drive mode. In the first motor drive mode or in the second motor drive mode, one motor MG1 or MG2 may be controlled to output power with following up the other motor MG2 or MG1 at stop in the coupled condition of the clutch C0 (see the broken line in Fig. 10).

In the hybrid vehicle 20 of the embodiment, the mode change of the motor drive among the first motor drive mode to the third motor drive mode enables the power to be transmitted to the driveshaft 69 with high efficiency with a change of the change gear ratio in the transmission 60. In the first motor drive mode where only the motor MG2 is driven and controlled in combination with the first speed state of the transmission 60 set by the fixation of the ring gear 62 of the first change-speed planetary gear mechanism PG1 to the transmission casing by means of the brake B1, in the case of an upshift change of the change gear ratio in the transmission 60, the motor MG1 is first driven and controlled to make the rotation speed of the ring gear 66 of the second change-speed planetary gear mechanism PG2 approach to 0. The subsequent fixation of the ring gear 66 of the second change-speed planetary gear mechanism PG2 to the transmission casing by means of the brake B2 makes a shift to the third motor drive mode or more specifically to the 1^{st} speed-2^{nd} speed simultaneous engagement state. The subsequent release of the brake B1 to allow the rotation of the ring gear 62 of the first change-speed planetary gear mechanism PG1 makes a shift to the second motor drive mode where only the motor MG1 is driven and controlled, accompanied with setting the transmission 60 in the second speed state. This causes the change gear ratio of the transmission 60 to be changed to an upshift speed (second speed). In the second motor drive mode
where only the motor MG1 is driven and controlled in combination with the second speed state of the transmission 60 set by the fixation of the ring gear 66 of the second change-speed planetary gear mechanism PG2 to the transmission casing by means of the brake B2, in the case of an upshift change of the change gear ratio in the transmission 60, the motor MG2 is first driven and controlled to make the rotation speed of the ring gear 62 of the first change-speed planetary gear mechanism PG1 synchronous with the rotation speed of the carrier 64 (equivalent to the rotation speed of the driveshaft 69). The subsequent interconnection of the carrier 64 and the ring gear 62 of the first change-speed planetary gear mechanism PG1 by means of the clutch C1 makes a shift to the third motor drive mode or more specifically to the 2^{nd} speed-3^{rd} speed simultaneous engagement state. The subsequent release of the brake B2 to allow the rotation of the ring gear 66 of the second change-speed planetary gear mechanism PG2 makes a shift to the first motor drive mode where only the motor MG2 is driven and controlled, accompanied with setting the transmission 60 in the third speed state. This causes the change gear ratio of the transmission 60 to be changed to an upshift speed (third speed). In the hybrid vehicle 20 of the embodiment, the transmission 60 is used to reduce the rotation speed of either the carrier shaft 45a or the first motor shaft 46 and thereby amplify the torque even in the motor drive mode. This arrangement desirably decreases the maximum torques required for the motors MG1 and MG2 and thereby allows size reduction of the motors MG1 and MG2. The mode change of the motor drive transits through the third motor drive mode, that is, the simultaneous engagement mode, at the time of a change of the change gear ratio in the transmission 60. This arrangement effectively prevents a torque-off condition at the time of a change of the change gear ratio and ensures a smooth and shockless change of the change gear ratio.

The series of operations described above is performed basically in a reverse flow for a downshift change of the change gear ratio of the transmission 60 in the motor drive mode. In the first motor drive mode where only the motor MG2 is driven and controlled to output power or in the second motor drive mode where only the motor MG1 is driven and controlled to output power, in response to an increase in driving force demand or in response to a decrease in state of charge SOC of the battery 35, the other motor MG1 or MG2 at stop to output no power is driven and controlled to make the rotation speed Nm1 or the rotation speed Nm2 synchronous with the rotation speed of the sun gear 41 or the rotation speed of the carrier 45 in the power distribution integration mechanism 40. After the synchronization of the rotation speed, the clutch C0 is coupled, and the other motor MG1 or MG2 is controlled to motor and start the engine 22. This arrangement allows a start of the engine 22 with smooth power transmission to the driveshaft 69. On a start of the engine 22 in the third motor mode where both the motors MG1 and MG2 are driven and controlled to output power, a power transmission-conversion process is performed. The power transmission-conversion process selects one motor MG1 or MG2 as a motor of continuously outputting power according to the target change gear ratio of the transmission 60 and causes the power of the other motor MG2 or MG1 as a motor of not continuously outputting power to be output to the selected one motor MG1 or MG2. On completion of the power transmission-conversion process, the brake B2 or the brake B1 is released to separate the other motor MG2 or MG1 as the motor of not continuously outputting power from the transmission 60. The separated other motor MG2 or MG1 is then driven and controlled to make the rotation speed Nm2 or the rotation speed Nm1 synchronous with the rotation speed of the carrier 45 or the rotation speed of the sun gear 41 in the power distribution integration mechanism 40. After the synchronization of the rotation speed, the clutch C0 is coupled, and the other motor MG2 or MG1 is controlled to motor and start the engine 22. This arrangement allows a start of the engine 22 with smooth power transmission to the driveshaft 69. In the first motor drive mode or in the second motor drive mode, when one motor MG1 or MG2 is controlled to output power with following up the other motor MG2 or MG1 at stop in the coupled condition of the clutch C0, the engine 22 is motored to start by the other motor MG2 or MG1 at stop.

As described above, the hybrid vehicle 20 of the embodiment is equipped with the transmission 60 including the three element-type first change-speed planetary gear mechanism PG1 and the three element-type second change-speed planetary gear mechanism PG2. The transmission 60 is located in the downstream of (in the rear portion of the vehicle) and is arranged coaxially with the engine 20, the motors MG1 and MG2, and the power distribution integration mechanism 40. The transmission 60 of this configuration has the significantly reduced dimensions both in the axial direction and in the radial direction, compared with the transmission of the parallel-shaft structure. The power output apparatus including the engine 22, the motors MG1 and MG2, the power distribution integration mechanism 40, and the transmission 60 is accordingly small-sized and is specifically suitable for being mounted on the hybrid vehicle 20 of the rear-wheel drive-based system.

In the structure of the transmission 60, the brake B1 as the first fixation device is engaged to fix the ring gear 62 of the first change-speed planetary gear mechanism PG1 in the non-rotatable manner. Such fixation specifies the carrier 45 or the first element of the power distribution integration mechanism 40 to the output element and causes the motor MG2 connecting with the carrier 45 to function as a motor, while specifying the sun gear 41 or the second element of the power distribution integration mechanism 40 to the reactive force element and causing the motor MG1 connecting with the sun gear 41 to function as a generator. In the structure of the transmission 60, the brake B2 as the second fixation device is engaged to fix the ring gear 66 as the fixable element of the second change-speed planetary gear mechanism PG2 in the non-rotatable manner. Such fixation specifies the sun gear 41 or the second element of the power distribution integration mechanism 40 to the output element and causes the motor MG1 connecting with the sun gear 41 to function as a motor, while specifying the carrier 45 or the first element of the power distribution integration mechanism 40 to the reactive force element and causing the motor MG2 connecting with the carrier 45 to function as a generator. The hybrid vehicle 20 of the embodiment has adequate changeover between the fixation of the ring gear 62 of the first change-speed planetary gear mechanism PG1 by means of the brake B1 and the fixation of the ring gear 66 of the second change-speed planetary gear mechanism PG2 by means of the brake B2. Such adequate changeover effectively prevents the rotation speed Nm1 or Nm2 of one motor MG1 or MG2 functioning as the generator from decreasing to a negative value with an increase in rotation speed Nm2 or Nm1 of the other motor MG2 or MG1 functioning as the motor, thus preventing the occurrence of power circulation. In the structure of the transmission 60, both the brakes B1 and B2 are engaged to fix both the ring gear 62 of the first change-speed planetary gear mechanism PG1 and the ring gear 66 of the second change-speed planetary gear mechanism PG2 in the non-rotatable manner. Such fixation causes the output power of the engine 22 to be mechanically transmitted to the driveshaft 69 at the fixed change gear ratio. This arrangement enables the hybrid vehicle 20 to have the improved power transmission efficiency in the wider driving range.

The transmission 60 has the clutch C1 as the change-speed connecting-disconnecting device to connect and disconnect the carrier 64 as the output element with and from the ring gear 62 as the fixable element in the first change-speed planetary gear mechanism PG1. The transmission 60 is set in the 2^{nd} speed-3^{rd} speed simultaneous engagement state by connecting the carrier 64 with the ring gear 62 of the first change-speed planetary gear mechanism PG1 by means of the clutch C1 with the ring gear 66 as the fixable element of the second change-speed planetary gear mechanism PG2 kept fixed in the non-rotatable manner by means of the brake B2. In this 2^{nd} speed-3^{rd} speed simultaneous engagement state, the output power of the engine 22 is mechanically transmitted to the driveshaft 69 at the fixed change gear ratio, which is different from the fixed change gear ratio in the 1^{st} speed-2^{nd} speed simultaneous engagement state of fixing both the ring gear 62 of the first change-speed planetary gear mechanism PG1 and the ring gear 66 of the second change-speed planetary gear mechanism PG2 in the non-rotatable manner by means of the brakes B1 and B2. The transmission 60 is set in the third speed state by releasing the brake B2 to allow the rotation of the ring gear 66 of the second change-speed planetary gear mechanism PG2 in the 2^{nd} speed-3^{rd} speed simultaneous engagement state. In this state, the clutch C1 substantially locks the respective elements of the second change-speed planetary gear mechanism PG2 to allow their integral rotation. The power output from the carrier 45 as the first element of the power distribution integration mechanism 40 is thus directly transmitted to the driveshaft 69. This arrangement enables the hybrid vehicle 20 to have the improved power transmission efficiency in the wider driving range. The transmission 60 may be constructed to include a clutch of connecting and disconnecting the carrier 64 as the output element with and from the ring gear 66 as the fixable element of the second change-speed planetary gear mechanism PG2.

In the hybrid vehicle 20 of the embodiment, the transmission 60 includes the brake B3 as the third fixation device to fix the sun gear 41 or the second element of the power distribution integration mechanism 40 in the non-rotatable manner. The transmission 60 is set in the third speed fixation state by fixing the sun gear 41 (reactive force element) as the second element of the power distribution integration mechanism 40 in the non-rotatable manner by means of the brake B3 with the carrier 64 as the output element and the ring gear 62 as the fixable element of the first change-speed planetary gear mechanism PG1 kept interconnected by means of the clutch C1. In this third speed fixation state, the output power of the engine 22 is mechanically transmitted to the driveshaft 69 at the fixed change gear ratio, which is different from the fixed change gear ratio in the 1^{st} speed-2^{nd} speed simultaneous engagement state of fixing both the ring gear 62 of the first change-speed planetary gear mechanism PG1 and the ring gear 66 of the second change-speed planetary gear mechanism PG2 in the non-rotatable manner by means of the brakes B1 and B2 and from the fixed change gear ratio in the 2^{nd} speed-3^{rd} speed simultaneous engagement state of connecting the carrier 64 with the ring gear 62 of the first change-speed planetary gear mechanism PG1 by means of the clutch C1. The hybrid vehicle 20 accordingly has the improved power transmission efficiency in the wider driving range. In the transmission 60 having the clutch of connecting and disconnecting the carrier 64 as the output element with and from the ring gear 66 as the fixable element of the second change-speed planetary gear mechanism PG2, the brake B3 as the third fixation device may be structured to fix the carrier 45 as the first element of the power distribution integration mechanism 40 in the non-rotatable manner. The brake B3 may be provided separately from the transmission 60.

The hybrid vehicle 20 of the embodiment has the clutch C0 to connect and disconnect the sun gear shaft 41a with and from the first motor shaft 46, that is, to connect and disconnect the sun gear 41 with and from the motor MG1. When the clutch C0 is released to disconnect the sun gear shaft 41a from the first motor shaft 46, the function of the power distribution integration mechanism 40 causes the engine 22 to be substantially separated from the motors MG1 and MG2 and the transmission 60. In the released condition of the clutch C0 with the operation of the engine 22 stopped in the hybrid vehicle 20, the power from at least one of the motors MG1 and MG2 is transmitted to the driveshaft 69 with high efficiency with a change of the change gear ratio in the transmission 60. The configuration of the hybrid vehicle 20 desirably decreases the maximum torques required for the motors MG1 and MG2 and thereby allows size reduction of the motors MG1 and MG2. The clutch C0 is not restricted to the structure of connecting and disconnecting the sun gear 41 with and from the motor MG1. The clutch C0 may be structured to connect and disconnect the carrier 45 (first element) with and from the carrier shaft 45a (the motor MG2) or may be structured to connect and disconnect the crankshaft 26 of the engine 22 with and from the ring gear 42 (third element).

In the hybrid vehicle 20 of the embodiment, the power distribution integration mechanism 40 is located between the motors MG1 and MG2 and is arranged coaxially with the motors MG1 and MG2. This arrangement allows size reduction of the motors MG1 and MG2 in the radial direction. The power output apparatus is accordingly small-sized and is specifically suitable for being mounted on the hybrid vehicle 20 of the rear-wheel drive-based system. The power distribution integration mechanism 40 constructed as the three element-type planetary gear mechanism allows the further size reduction and causes the power output apparatus to be small-size and suitable for being mounted on the hybrid vehicle 20.

The hybrid vehicle 20 of the embodiment is equipped with the power output apparatus that includes the engine 22, the motors MG1 and MG2, the power distribution integration mechanism 40, and the transmission 60 and is configured to drive the rear wheels RWa and RWb with the power from the driveshaft 69. This power output apparatus is small-sized and is specially suitable for the hybrid vehicle 20 of the rear-wheel drive-based system, while improving the power transmission efficiency in the wider driving range. The hybrid vehicle 20 of the above configuration accordingly has both the high fuel consumption and the good driving performance.

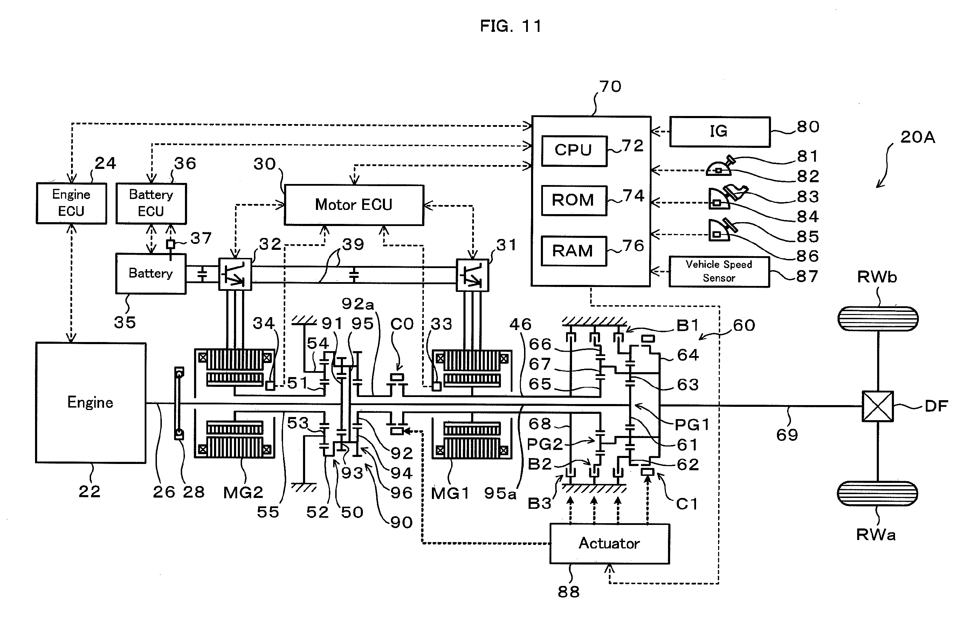

Fig. 11 schematically illustrates the configuration of a hybrid vehicle 20A in a modified example. The hybrid vehicle 20A of this modified configuration has a power distribution integration mechanism 90, in place of the power distribution integration mechanism 40 constructed as the double-pinion planetary gear mechanism. As shown in Fig. 11, the power distribution integration mechanism 90 is constructed as a three element-type planetary gear mechanism including a first sun gear 91 and a second sun gear 92 designed to have different numbers of teeth and a carrier 95 designed to hold multiple stepped gear 96 for linkage of a first pinion gear 93 engaging with the first sun gear 91 to a second pinion gear 94 engaging with the second sun gear 92. The first sun gear 91 (third element) is connected to the crankshaft 26 of the engine 22 via the damper 28. The second sun gear 92 (second element) is connected to the motor MG1 (hollow rotor) as the second motor via a hollow sun gear 92a extended from the second sun gear 92 in a direction opposite to the engine 22 (toward the rear end of the vehicle) , the clutch C0, and the hollow first motor shaft 46. The carrier 95 (first element) is connected to the motor MG2 (hollow rotor) as the first motor via the reduction gear mechanism 50 and the hollow second motor shaft 55 extended from the reduction gear mechanism 50 (the sun gear shaft 51) toward the engine 22. A carrier shaft 95a is extended from the carrier 95 in the direction opposite to the engine 22 (toward the rear end of the vehicle) to pass through the hollow sun gear shaft 92a and the hollow first motor shaft 46. The carrier shaft 95a is connected with the sun gear 61 as the input element of the first change-speed planetary gear mechanism PG1 in the transmission 60. The first motor shaft 46 connectable with the second sun gear 92 via the clutch C0 is further extended from the motor MG1 in the direction opposite to the engine 22 (toward the rear end of the vehicle) and is connected with the sun gear 65 of the second change-speed planetary gear mechanism PG2 in the transmission 60. In the configuration of this modified example, the power distribution integration mechanism 90 is located between the coaxial motors MG1 and MG2 and is arranged coaxially with the motors MG1 and MG2. Namely the engine 22, the motors MG1 and MG2, the power distribution integration mechanism 90, and the transmission 60 as the constituents of the power output apparatus in the modified example are arranged in the sequence of the engine 22, the motor MG2, (the reduction gear mechanism 50), the power distribution integration mechanism 90, the motor MG1, and the transmission 60 in a direction from the front end toward the rear end of the vehicle. The hybrid vehicle 20A equipped with the power distribution integration mechanism 90 of this structure has the similar functions and effects to those of the hybrid vehicle 20 of the embodiment discussed previously. The structure of the three element-type planetary gear mechanism including the two sun gears 91 and 92, the stepped gears 96, and the carrier 95 allows size reduction of the power distribution integration mechanism 90 in its radial direction and thus enables the power output apparatus to be smaller-sized.

The hybrid vehicles 20 and 20A of the embodiment and its modified example discussed above may be constructed as rear-wheel drive-based four-wheel drive vehicles. The first change-speed planetary gear mechanism PG1 and the second change-speed planetary gear mechanism PG2 of the transmission 60 may be structured as double-pinion planetary gear mechanisms. The above embodiment and its modified example describe the power output apparatuses mounted on the hybrid vehicle 20 and on the hybrid vehicle 20A. The power output apparatus of the invention is, however, not restrictively applied to such hybrid vehicles but may be mounted on diversity of moving bodies including various vehicles other than motor vehicles, boats and ships, and aircraft or may be built in stationary equipment, such as construction machinery.

The embodiment and its modified examples discussed above are to be considered in all aspects as illustrative and not restrictive. There may be many other modifications, changes, and alterations without departing from the scope or spirit of the main characteristics of the present invention.

### Industrial Applicability

The technique of the invention is preferably applied to the manufacturing industries of power output apparatuses and hybrid vehicles.

## Claims

1. A power output apparatus configured to output power to a driveshaft, the power output apparatus comprising:
an internal combustion engine;
a first motor designed to input and output power;
a second motor designed to input and output power;
a power distribution integration mechanism constructed to have a first element connecting with a rotating shaft of the first motor, a second element connecting with a rotating shaft of the second motor, and a third element connecting with an engine shaft of the internal combustion engine and to allow differential rotations of the three elements; and
a speed change-transmission assembly including: a first change-speed differential rotation mechanism configured to have an input element connecting with the first element of the power distribution integration mechanism, an output element connecting with the driveshaft, and a fixable element and to allow differential rotations of the three elements; a second change-speed differential rotation mechanism configured to have an input element connecting with the second element of the power distribution integration mechanism, an output element connecting with the driveshaft, and a fixable element and to allow differential rotations of the three elements; a first fixation device configured to fix the fixable element of the first change-speed differential rotation mechanism in a non-rotatable manner; and a second fixation device configured to fix the fixable element of the second change-speed differential rotation mechanism in a non-rotatable manner.

2. The power output apparatus in accordance with claim 1, wherein the first change-speed differential rotation mechanism and the second change-speed differential rotation mechanism of the speed change-transmission assembly are three element-type planetary gear mechanisms.

3. The power output apparatus in accordance with claim 2, wherein the first change-speed differential rotation mechanism is a single-pinion planetary gear mechanism including a sun gear connected with the first element of the power distribution integration mechanism, a ring gear arranged to be fixable in a non-rotatable manner by the first fixation device, and a carrier arranged to hold at least one pinion gear engaging with both the sun gear and the ring gear and connected with the driveshaft, and wherein the second change-speed differential rotation mechanism is a single-pinion planetary gear mechanism including a sun gear connected with the second element of the power distribution integration mechanism, a ring gear arranged to be fixable in a non-rotatable manner by the second fixation device, and a carrier arranged to hold at least one pinion gear engaging with both the sun gear and the ring gear and connected with the carrier of the first change-speed differential rotation mechanism and with the driveshaft.

4. The power output apparatus in accordance with claim 1, wherein the speed change-transmission assembly further includes a change-speed connecting-disconnecting device configured to allow connection and disconnection of the output element with and from the fixable element in either one of the first change-speed differential rotation mechanism and the second change-speed differential rotation mechanism.

5. The power output apparatus in accordance with claim 4, the power output apparatus further including:
a third fixation device configured to fix either one of the first element and the second element of the power distribution integration mechanism in a non-rotatable manner.

6. The power output apparatus in accordance with claim 1, the power output apparatus further including:
a connecting-disconnecting device configured to allow one of connection and disconnection of the first motor with and from the first element, connection and disconnection of the second motor with and from the second element, and connection and disconnection of the internal combustion engine with and from the third element.

7. The power output apparatus in accordance with claim 1, wherein the power distribution integration mechanism is located between the first motor and the second motor and is arranged coaxially with the first motor and the second motor.

8. The power output apparatus in accordance with claim 7, wherein the power distribution integration mechanism is a three element-type planetary gear mechanism.

9. A hybrid vehicle equipped with drive wheels driven with power transmitted from a driveshaft, the hybrid vehicle comprising:
an internal combustion engine;
a first motor designed to input and output power;
a second motor designed to input and output power;
a power distribution integration mechanism constructed to have a first element connecting with a rotating shaft of the first motor, a second element connecting with a rotating shaft of the second motor, and a third element connecting with an engine shaft of the internal combustion engine and to allow differential rotations of the three elements; and
a speed change-transmission assembly including: a first change-speed differential rotation mechanism configured to have an input element connecting with the first element of the power distribution integration mechanism, an output element connecting with the driveshaft, and a fixable element and to allow differential rotations of the three elements; a second change-speed differential rotation mechanism configured to have an input element connecting with the second element of the power distribution integration mechanism, an output element connecting with the driveshaft, and a fixable element and to allow differential rotations of the three elements; a first fixation device configured to fix the fixable element of the first change-speed differential rotation mechanism in a non-rotatable manner; and a second fixation device configured to fix the fixable element of the second change-speed differential rotation mechanism in a non-rotatable manner.

10. The hybrid vehicle in accordance with claim 9, wherein the first change-speed differential rotation mechanism and the second change-speed differential rotation mechanism of the speed change-transmission assembly are three element-type planetary gear mechanisms.

11. The hybrid vehicle in accordance with claim 10, wherein the first change-speed differential rotation mechanism is a single-pinion planetary gear mechanism including a sun gear connected with the first element of the power distribution integration mechanism, a ring gear arranged to be fixable in a non-rotatable manner by the first fixation device, and a carrier arranged to hold at least one pinion gear engaging with both the sun gear and the ring gear and connected with the driveshaft, and wherein the second change-speed differential rotation mechanism is a single-pinion planetary gear mechanism including a sun gear connected with the second element of the power distribution integration mechanism, a ring gear arranged to be fixable in a non-rotatable manner by the second fixation device, and a carrier arranged to hold at least one pinion gear engaging with both the sun gear and the ring gear and connected with the carrier of the first change-speed differential rotation mechanism and with the driveshaft.

12. The hybrid vehicle in accordance with claim 9, wherein the speed change-transmission assembly further includes a change-speed connecting-disconnecting device configured to allow connection and disconnection of the output element with and from the fixable element in either one of the first change-speed differential rotation mechanism and the second change-speed differential rotation mechanism.

13. The hybrid vehicle in accordance with claim 12, the hybrid vehicle further including:
a third fixation device configured to fix either one of the first element and the second element of the power distribution integration mechanism in a non-rotatable manner.

14. The hybrid vehicle in accordance with claim 9, the hybrid vehicle further including:
a connecting-disconnecting device configured to allow one of connection and disconnection of the first motor with and from the first element, connection and disconnection of the second motor with and from the second element, and connection and disconnection of the internal combustion engine with and from the third element.

15. The hybrid vehicle in accordance with claim 9, wherein the power distribution integration mechanism is located between the first motor and the second motor and is arranged coaxially with the first motor and the second motor.

16. The hybrid vehicle in accordance with claim 15, wherein the power distribution integration mechanism is a three element-type planetary gear mechanism.
